# EUROPÄISCHE PATENTSCHRIFT

(11) **EP 3 148 864 B1**
(45) Veröffentlichungstag und Bekanntmachung des Hinweises auf die Patenterteilung: **04.04.2018**
(21) Anmeldenummer: 15727578.5
(22) Anmeldetag: 20.05.2015
(51) Int. Cl.: B62K 23/04

(54) **DREHBETÄTIGUNGSELEMENT FÜR EIN LENKERGEFÜHRTES FAHRZEUG**
TWIST GRIP FOR A VEHICLE GUIDED BY A HANDLEBAR
ACTIONNEUR ROTATIF POUR UN VÉHICULE GUIDÉE PAR UN GUIDON

(30) Priorität: 26.05.2014 DE 102014107415
(43) Veröffentlichungstag der Anmeldung: 05.04.2017
(73) Patentinhaber: Gustav Magenwirth GmbH & Co. KG, 72574 Bad Urach (DE)
(72) Erfinder: RUCKH, Stefan, 72587 Römerstein (DE); FRITSCHLE, Stefan, 72574 Bad Urach (DE); MCRORY, Conor, 84152 Mengkofen (DE); KEMENEY, Alexander, 72762 Reutlingen (DE)
(74) Vertreter: Hoeger, Stellrecht & Partner Patentanwälte mbB
(86) Internationale Anmeldenummer: PCT/EP2015/061158
(87) Internationale Veröffentlichungsnummer: WO 2015/181026

(56) Entgegenhaltungen:
- EP-A2- 1 477 398
- WO-A1-2011/121047
- US-A1- 2010 071 450

## Beschreibung

Die Erfindung betrifft ein Drehbetätigungselement für ein lenkergeführtes Fahrzeug, insbesondere ein Drehbetätigungselement für die Betriebszustandssteuerung eines Fahrzeugs, umfassend ein um eine Drehachse drehbar an einem Lenker gelagertes Griffelement, welches einen Griffabschnitt zur Auflage eines Fingers oder einer Hand einer Bedienungsperson und einen in einem drehfest am Lenker gehaltenen Drehbetätigungsgehäuse angeordneten Betätigungsabschnitt aufweist.

Ein derartiges Drehbetätigungselement ist beispielsweise aus der US-A-20100071450 bekannt.

Ein Drehbetätigungselement kann dabei ein Drehgriff sein, dessen Griffelement durch eine Hand gedreht wird, oder auch ein Drehbetätigungselement mit einem durch einen Finger, insbesondere einen Daumen, drehbaren Griffelement, oft als Daumengas bezeichnet.

Derartige Drehbetätigungselemente sind aus dem Stand der Technik bekannt, bei diesen Drehbetätigungselementen wird üblicherweise entweder ein Seilzug oder im Falle einer Erzeugung eines elektrischen Signals ein Potentiometer oder ein Hallsensor durch den Betätigungsabschnitt betätigt.

Derartige bekannte Drehbetätigungselemente haben jedoch den Nachteil, dass diese gegen Umwelteinflüsse anfällig sind.

Der Erfindung liegt daher die Aufgabe zugrunde, ein Drehbetätigungselement der gattungsgemäßen Art derart zu verbessern, dass dieses nicht durch Umwelteinwirkungen, wie Feuchtigkeit, Schmutz oder Ähnliches in seiner Funktion beeinträchtigt werden kann.

Diese Aufgabe wird bei einem Drehbetätigungselement der eingangs beschriebenen Art erfindungsgemäß dadurch gelöst, dass der Betätigungsabschnitt mindestens ein auf einer Bahn um die Drehachse bewegbares und in Richtung quer zu der Bahn federelastisch beaufschlagtes Druckelement aufweist, und dass in dem Gehäuse eine drehfest angeordnete Funktionseinheit angeordnet ist, welche mindestens einen in einem Innern der Funktionseinheit in einer Fläche verlaufenden Abtastpfad aufweist, entlang von welchem durch die Beaufschlagung mittels des Druckelements und abhängig von dem Ort der Beaufschlagung durch das Druckelement verschiedene Werte einer elektrischen Steuergröße abtastbar sind.

Der Vorteil der erfindungsgemäßen Lösung ist somit darin zu sehen, dass durch die Anordnung des Abtastpfads im Innern der Funktionseinheit die Möglichkeit besteht, diesen geschützt anzuordnen, und dass die Einwirkung auf den Abtastpfad lediglich durch mechanischen Druck mittels des die Funktionseinheit beaufschlagenden Druckelements erfolgt, so dass somit das Abtasten der elektrischen Steuergröße nicht durch eine elektrische Kontaktierung des Druckelements erfolgen muss, wie dies beispielsweise bei einem Potentiometer der Fall ist, sondern dass die elektrische Kontaktierung bei dem Erfassen der elektrischen Steuergröße unabhängig von dem Druckelement erfolgen kann.

Diese Lösung ermöglicht es, in vorteilhafter Weise das Drehbetätigungselement wesentlich funktionssicherer auszubilden, als dies bei den bekannten Lösungen der Fall ist.

Bei einer erfindungsgemäßen Lösung verläuft die Fläche in welcher der Abtastpfad liegt quer zur Drehachse, insbesondere liegt die Fläche in einer senkrecht zur Drehachse verlaufenden Ebene.

Eine andere vorteilhafte Lösung sieht vor, dass die Fläche um die Drehachse herum verläuft, insbesondere in einer um die Drehachse verlaufenden Zylinderfläche, liegt.

Ferner ist vorzugsweise vorgesehen, dass das Druckelement in Richtung quer, vorzugsweise senkrecht zu der Fläche federelastisch beaufschlagt ist, beispielsweise in Richtung parallel zur Drehachse oder radial zur Drehachse.

Hinsichtlich der Ausbildung des Drehbetätigungselements beispielsweise für eine Betriebszustandssteuerung, insbesondere eine Fahrzustands- oder Geschwindigkeitssteuerung, eines Fahrzeugs ist es besonders günstig, wenn das Griffelement im unbetätigten Zustand durch ein federelastisches Element in einer Ausgangsstellung gehalten ist, so dass in der Ausgangsstellung ein definierter Wert der elektrischen Steuergröße erfasst werden kann, welcher beispielsweise im Fall einer Betriebszustandssteuerung einen Ausgangswert für den jeweiligen Betriebszustand vorgibt.

Im Fall einer Drehzahlsteuerung eines Verbrennungsmotors ist dieser Ausgangsstellung beispielsweise die Leerlaufdrehzahl zugeordnet.

Im Fall einer Steuerung eines elektrischen Antriebs ist dieser Ausgangsstellung beispielsweise die Drehzahl Null zugeordnet.

Vorzugsweise ist dabei vorgesehen, dass das federelastische Element in dem Gehäuse angeordnet ist.

Im einfachsten Fall ist dabei vorgesehen, dass das federelastische Element durch eine Drehfeder gebildet wird.

Eine besonders vorteilhafte Ausgestaltung des Drehbetätigungselements sieht vor, dass das Griffelement ausgehend von der Ausgangsstellung gegen eine erste Kraft, die in Richtung zurück zur Ausgangsstellung wirkt, in einer ersten Drehrichtung drehbar ist.

Besonders vorteilhafte weitere Funktionen lassen sich dann erreichen, wenn das Griffelement ausgehend von der Ausgangsstellung gegen eine zweite Kraft, insbesondere eine der ersten Kraft entgegengesetzt wirkende Kraft, die in Richtung zurück zur Ausgangsstellung wirkt, drehbar ist.

Besonders zweckmäßig ist es dabei, wenn die erste Kraft und die zweite Kraft durch denselben Kraftspeicher, insbesondere dasselbe federelastische Element, erzeugbar sind.

Hinsichtlich der von der Funktionseinheit generierbaren Werte der elektrischen Steuergröße sind die unterschiedlichsten Realisierungsmöglichkeiten denkbar.

So sieht alternativ oder ergänzend zu den vorstehend beschriebenen Lösungen eine vorteilhafte Ausführungsform vor, dass mit dem mindestens einen Abtastpfad ein von dem Wert der elektrischen Steuergröße in einer Ausgangsstellung des Griffelements abweichender Wert der elektrischen Steuergröße in einer anderen Stellung des Griffelements als der Ausgangsstellung erzeugbar ist.

Beispielsweise lässt sich dies dadurch realisieren, dass mit dem mindestens einen Abtastpfad ausgehend von der Ausgangsstellung des Griffelements ein mit zunehmendem Winkelabstand von der Ausgangsstellung stetig zu- oder abnehmender Wert der elektrischen Steuergröße erzeugbar ist.

Somit schafft die erfindungsgemäße Funktionseinheit die Möglichkeit, durch ein Abtasten längs des Abtastpfads beispielsweise sich kontinuierlich verändernde Werte der elektrischen Steuergröße zu erzeugen.

Derartig sich kontinuierlich verändernde Werte der elektrischen Steuergröße könnten in beliebiger Art und Weise variieren, wobei vorzugsweise ein stetiger Verlauf der Werte vorgesehen ist.

Die Werte können beispielsweise stetig zunehmende oder stetig abnehmende Werte und/oder beispielsweise auch durchgehend oder auch nur partiell auftretende progressive oder durchgehend oder auch nur partiell auftretende degressive Werte der elektrischen Steuergröße sein.

Im einfachsten Fall ist die Funktionseinheit so ausgebildet, dass durch ein Abtasten längs des jeweiligen Abtastpfades eine lineare Variation der Werte der Steuergröße erzeugbar ist, wobei dies eine lineare Zunahme oder eine lineare Abnahme sein kann.

Eine andere vorteilhafte Lösung sieht vor, dass mit dem mindestens einen Abtastpfad mindestens zwei unterschiedliche Schaltsignale erzeugbar sind.

In diesem Fall dient der Abtastpfad dazu, abhängig von dem Ort der Abtastung, entweder das eine oder das andere der Schaltsignale zu erzeugen.

In diesem Fall ist es aber auch möglich, eine Kaskade von beispielsweise stufenweise sich ändernden Schaltsignalen abhängig vom Ort der Abtastung längs des Abtastpfades zu erfassen.

Derartige Schaltsignale könnten beispielsweise in Stufen variierende Potentiale sein, die durch das Abtasten erfasst werden können.

Eine besonders vorteilhafte Lösung sieht vor, dass in der Funktionseinheit mehrere Abtastpfade vorgesehen sind.

Bei derartigen mehreren Abtastpfaden ist ein Abtasten derselben mittels eines Druckelements insbesondere dann vorteilhaft möglich, wenn die mehreren Abtastpfade in derselben, senkrecht zur Drehachse verlaufenden Ebene angeordnet sind.

Ferner könnten die mehreren Abtastpfade in unterschiedlichster Weise in der Ebene verlaufen.

Dadurch, dass der Betätigungsabschnitt jedoch um die Drehachse drehbar ist, ist vorzugsweise vorgesehen, dass die mehreren Abtastpfade um die Drehachse herum angeordnet sind.

Eine Möglichkeit zum Anordnen der mehreren Abtastpfade sieht vor, dass die mehreren Abtastpfade in verschiedenen Kreissektoren um die Drehachse angeordnet sind.

Dabei besteht beispielsweise die Möglichkeit, innerhalb eines Kreissektors mehrere Abtastpfade vorzusehen, oder alle Abtastpfade jeweils in einzelnen Kreissektoren anzuordnen.

Besonders vorteilhaft ist es, wenn bei der Anordnung jeweils eines Abtastpfades in einem der Kreissektoren die Kreissektoren einander nicht überlappen, sodass die Abtastpfade durch ihre Anordnung in unterschiedlichen Kreissektoren voneinander getrennt werden können.

Prinzipiell könnten im Rahmen der erfindungsgemäßen Lösung die Abtastpfade um die Drehachse herum spiralförmig oder in Segmenten von Spiralen oder auch in beliebiger Weise radial zunehmend oder radial abnehmend verlaufen.

Eine konstruktiv besonders einfache Lösung sieht vor, dass die mehreren Abtastpfade in unterschiedlichen Kreisbogensegmenten um die Drehachse angeordnet sind.

Dabei könnten um die Drehachse mehrere Kreisbögen mit entsprechenden Kreisbogensegmenten vorgesehen sein.

Konstruktiv besonders einfach ist jedoch eine Lösung, bei welcher die mehreren Abtastpfade auf einem einzigen Kreisbogen, jedoch auf mehrere Kreisbogensegmente dieses Kreisbogens verteilt, angeordnet sind.

Beim Vorsehen mehrerer Abtastpfade wurde nichts darüber ausgesagt, ob die mehreren Abtastpfade durch ein einziges Druckelement beaufschlagt werden sollen oder durch mehrere Druckelemente.

Prinzipiell wäre es denkbar, mit einem einzigen Druckelement mehrere Abtastpfade, beispielsweise jeweils nacheinander, zu beaufschlagen.

Eine besonders vorteilhafte Ausführungsform sieht jedoch vor, dass jedem der Abtastpfade ein Druckelement zugeordnet ist.

Dabei besteht die Möglichkeit, jeweils ein Druckelement nur für einen Abtastpfad einzusetzen oder ein Druckelement beispielsweise für zwei Abtastpfade einzusetzen, wenn die Abtastpfade beispielsweise aufeinanderfolgend auf einem Kreisbogensegment angeordnet sind.

Eine hinsichtlich einer mehrfachen Abtastung besonders bevorzugte Lösung sieht vor, dass bei einer Drehung des Griffelements jedes der Druckelemente über den jeweiligen mindestens einen diesem Druckelement zugeordneten Abtastpfad bewegt wird, das heißt, dass bei einer Drehung des Griffelements mehrere Druckelemente zumindest teilweise gleichzeitig über mehrere Abtastpfade hinweg bewegt werden, um bei den jeweiligen Abtastpfaden eine Abtastung zu bewirken.

Insbesondere ist bei einer vorteilhaften Ausführungsform der erfindungsgemäßen Lösung vorgesehen, dass entlang von mindestens zwei Abtastpfade durch Beaufschlagung von mindesten zwei an dem Betätigungsabschnitt angeordneten Druckelementen ein Erfassen von Steuergrößen erfolgt, wobei die Druckelemente bei der Drehung des Griffelements gleichzeitig um die Drehachse bewegt werden.

Eine besonders vorteilhafte erfindungsgemäße Lösung sieht vor, dass der jeweilige Abtastpfad durch ein erstes Schichtsystem und ein dem ersten Schichtsystem zugewandtes zweites Schichtsystem gebildet ist, dass das zweite Schichtsystem im beaufschlagungsfreien Zustand im Abstand von dem ersten Schichtsystem angeordnet ist und im durch einen Druckpunkt des Druckelements beaufschlagten Zustand das erste Schichtsystem in einem Kontaktpunkt lokal kontaktiert und dass die Lage des Kontaktpunkts den Wert der elektrischen Steuergröße festlegt.

Beispielsweise könnte der jeweilige Abtastpfad durch ein sich in einer Zylinderfläche um die Drehachse erstreckendes erstes Schichtsystem und ein dem ersten Schichtsystem zugewandtes zweites Schichtsystem gebildet sein.

Eine besonders vorteilhafte erfindungsgemäße Lösung sieht vor, dass der jeweilige Abtastpfad durch ein sich in der senkrecht zur Drehachse verlaufenden Ebene erstreckendes erstes Schichtsystem und ein dem ersten Schichtsystem zugewandtes zweites Schichtsystem gebildet ist.

Durch diese Lösungen ist in einfacher Weise innerhalb der Funktionseinheit ein Abtastpfad realisierbar, der gegenüber der Umgebung abgeschirmt ist, wobei die Lage des Kontaktpunkts, an welchem eine Abtastung erfolgt, durch den Ort festgelegt wird, an welchem die Funktionseinheit durch den Druckpunkt des Druckelements beaufschlagt wird.

Insbesondere ist dabei vorgesehen, dass verschiedene Winkellagen des Kontaktpunkts bezogen auf die Drehachse verschiedene Werte der elektrischen Steuergröße festlegen.

Um variierende Werte der elektrische Steuergröße zu erreichen, ist vorteilhafterweise vorgesehen, dass das erste und/oder das zweite Schichtsystem so ausgebildet sind, dass unterschiedliche Lagen des Kontaktpunktes zu unterschiedlichen Werten der elektrischen Steuergröße führen.

Das heißt, dass die unterschiedlichen Werte der elektrischen Steuergröße entweder durch das erste Schichtsystem oder durch das zweite Schichtsystem oder durch die Kombination des ersten Schichtsystems mit dem zweiten Schichtsystem festgelegt werden können.

Vorzugsweise ist dabei vorgesehen, dass eines der Schichtsysteme so ausgebildet ist, dass auf diesem längs des Abtastpfades örtlich variierende Werte der elektrischen Steuergröße abtastbar sind.

In gleicher Weise könnte das zweite Schichtsystem ausgebildet sein.

Eine hinsichtlich der Einfachheit vorteilhafte Lösung sieht vor, dass das zweite Schichtsystem eine elektrisch gut leitende Schicht umfasst, mit welcher entsprechend der Lage des Kontaktpunkts längs des Abtastpfades die Werte der von dem ersten Schichtsystem erzeugten elektrischen Steuergröße erfasst werden.

Hinsichtlich der Anordnung des ersten Schichtsystems wurden bislang keine näheren Angaben gemacht.

Wenn ein Träger vorgesehen ist, kann dieser grundsätzlich eine beliebig gekrümmte Fläche, insbesondere jedoch eine Zylinderfläche oder eine ebene Fläche, aufweisen.

Das erste Schichtsystem könnte ein von einem Träger unabhängiges auf diesem aufliegendes Schichtsystem sein.

Eine vorteilhafte Lösung sieht vor, dass das erste Schichtsystem eine Beschichtung auf einem Träger der Funktionseinheit darstellt, so dass sich dadurch das erste Schichtsystem in besonders einfacher Weise auf dem Träger der Funktionseinheit anordnen lässt.

Auch das zweite Schichtsystem könnte ein eigenständiges separates Schichtsystem sein.

Vorzugsweise ist ferner vorteilhafterweise vorgesehen, dass das zweite Schichtsystem eine dem ersten Schichtsystem zugewandte Beschichtung auf einer elastischen Folie ist.

In diesem Fall ist vorzugsweise vorgesehen, dass der Träger und die elastische Folie durch eine außerhalb des Abtastpfades angeordnete Distanzlage im Abstand voneinander gehalten sind.

Dadurch sind zunächst im nicht beaufschlagten Zustand das erste Schichtsystem und das zweite Schichtsystem im Abstand voneinander angeordnet.

Bei einer Beaufschlagung der elastischen Folie lässt sich jedoch in einfacher Weise der Kontaktpunkt zwischen dem ersten Schichtsystem und dem zweiten Schichtsystem herstellen, wobei bei nachfolgender Nichtbeaufschlagung wiederum die elastische Folie dafür sorgt, dass das zweite Schichtsystem sich an dieser Stelle wiederum vom ersten Schichtsystem weg bewegt und im Abstand von diesem solange verbleibt, bis eine erneute Beaufschlagung erfolgt.

Vorzugsweise ist bei der erfindungsgemäßen Lösung vorgesehen, dass das erste Schichtsystem und das zweite Schichtsystem in einem gegen die Umgebung vollständig abgeschlossenem Raum angeordnet sind, so dass dadurch keinerlei Umwelteinflüsse wie Feuchtigkeit, Schmutz oder andere Medien die Wechselwirkung des ersten Schichtsystems mit dem zweiten Schichtsystem beeinträchtigen können.

Eine besonders zweckmäßige Lösung sieht vor, dass der abgeschlossene Raum durch den Träger und die diesem gegenüberliegend angeordnete elastische Folie sowie die zwischen dem Träger und der elastischen Folie außerhalb des Abtastpfades angeordnete Distanzlage gebildet ist.

Im Fall einer umfassenderen Signalerzeugung besteht auch die Möglichkeit, mehrere Abtastpfade in einer Fläche oder in verschiedenen, hintereinanderliegenden, insbesondere parallel zueinander verlaufenden Flächen zu realisieren.

Weitere Merkmale und Vorteile der erfindungsgemäßen Lösung sind Gegenstand der nachfolgenden Beschreibung sowie der zeichnerischen Darstellung einiger Ausführungsbeispiele.

In der Zeichnung zeigen:
- Fig. 1: eine Darstellung eines erfindungsgemäßen Drehgriffs im teilweisen Längsschnitt angeordnet auf einem Lenker;
- Fig. 2: eine vergrößerte Darstellung des Drehgriffs gemäß Fig. 1 ohne den Lenker;
- Fig. 3: einen Schnitt längs Linie 3-3 in Fig. 2;
- Fig. 4: einen Schnitt längs Linie 4-4 in Fig. 2;
- Fig. 5: einen Querschnitt durch einen Teilbereich einer Funktionseinheit des erfindungsgemäßen Drehgriffs längs Linie 5-5 in Fig. 6;
- Fig. 6: eine Draufsicht auf die Funktionseinheit des erfindungsgemäßen Drehgriffs bei einem Schnitt längs Linie 6-6 in Fig. 2;
- Fig. 7: einen Schnitt längs Linie 7-7 in Fig. 2, das heißt eine Draufsicht auf die Funktionseinheit ohne die elastische Folie und das zweite Schichtsystem;
- Fig. 8: eine Darstellung von Werten einer ersten Steuergröße und einer vierten Steuergröße über dem Drehwinkel des Griffelements bezogen auf den Ausgangszustand;
- Fig. 9: eine Darstellung von Werten einer zweiten Steuergröße über dem Drehwinkel des Griffelements;
- Fig. 10: eine Darstellung von Werten einer dritten Steuergröße über dem Drehwinkel des Griffelements und
- Fig. 11: eine Darstellung der Verschaltung der Funktionseinheit mit einem Steuergerät für das lenkergeführte Fahrzeug.

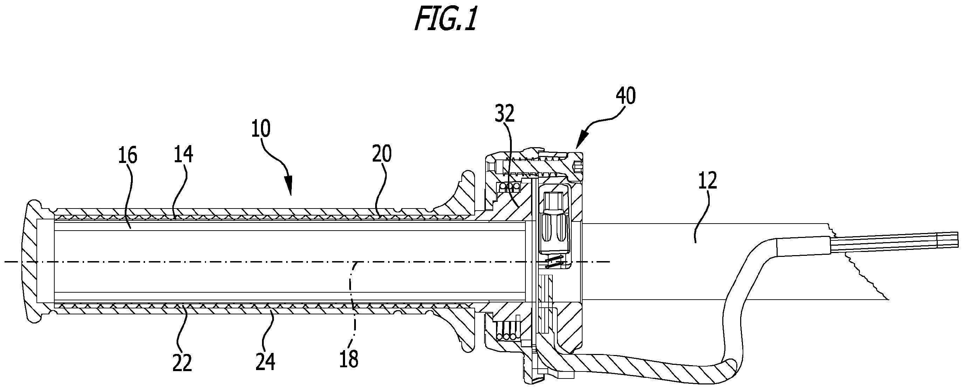

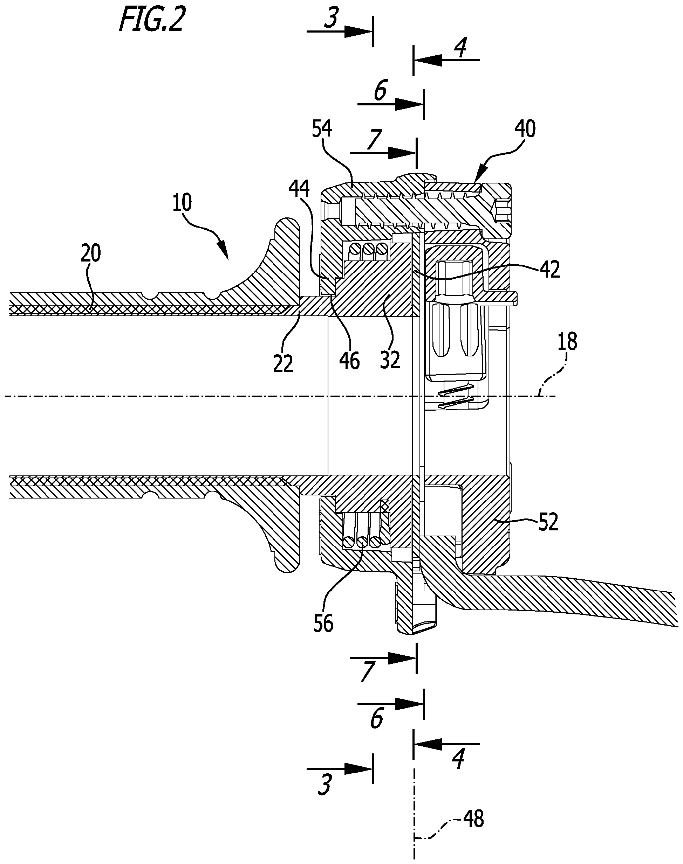

Ein in Fig. 1 und Fig. 2 dargestellter, als Ganzes mit 10 bezeichneter Drehgriff für ein durch einen Lenker 12 geführtes Fahrzeug umfasst ein auf einer Außenfläche 14 eines Griffendes 16 des Lenkers 12 um eine Drehachse 18 drehbar angeordnetes Griffrohr 20, welches einen Griffabschnitt 22 aufweist, der mit einem Elastomerformstück 24 zur Aufnahme einer Handfläche versehen ist, und welches einen Betätigungsabschnitt 32 aufweist, welcher in einem als Ganzes mit 40 bezeichneten Gehäuse gelagert ist, welches drehfest auf dem Lenker 12 montiert ist und den Betätigungsabschnitt 32 in Richtung der Drehachse 18 unverschieblich, jedoch um die Drehachse drehbar aufnimmt.

Der Betätigungsabschnitt 32 liegt dabei zwischen einer in dem Gehäuse 40 angeordneten flächenhaft ausgebildeten Funktionseinheit 42 und einem im Abstand von der Funktionseinheit 42 angeordneten Führungsflansch 44, welcher eine Öffnung 46 aufweist, durch welche der Griffabschnitt 22 des Griffrohrs 20 aus dem Gehäuse 40 herausgeführt ist.

Die flächenhaft ausgebildete Funktionseinheit 42 erstreckt sich dabei parallel zu einer Ebene 48, die senkrecht zur Drehachse 18 verläuft.

Das Gehäuse 40 ist - wie in Fig. 2 dargestellt - vorzugsweise als geteiltes Gehäuse ausgebildet und umfasst eine Gehäusebasis 52, die fest an dem Lenker 12, beispielsweise durch Kraftschluss, montierbar ist sowie einen Gehäusedeckel 54, welcher sich ausgehend von der Gehäusebasis 52 bis zu dem Führungsflansch 44 erstreckt und insbesondere den Betätigungsabschnitt 32 des Griffrohrs 20 übergreift.

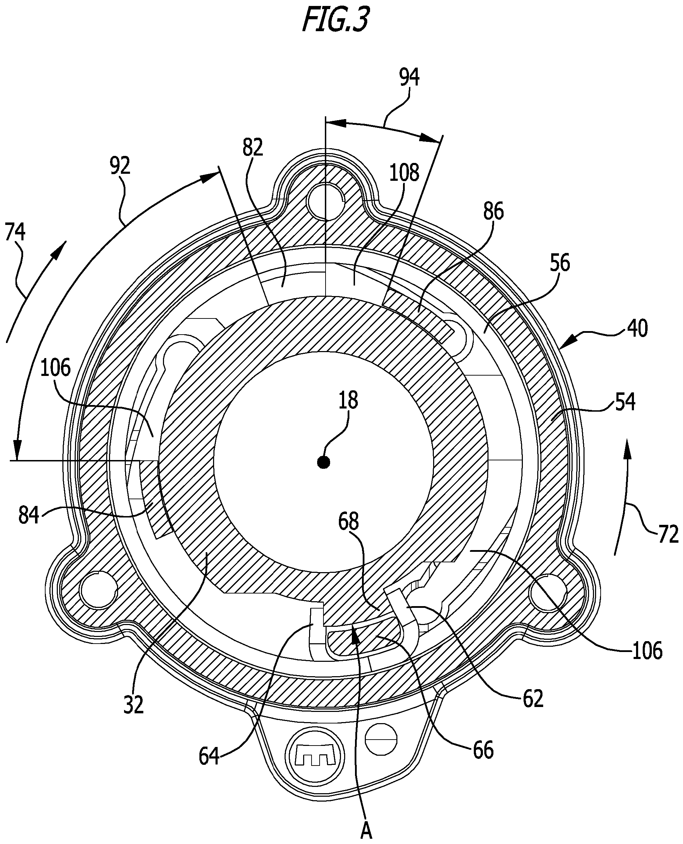

Zur Festlegung einer Ausgangsstellung A des Griffrohrs 20 relativ zum Gehäuse 40 und zum Erzeugen eines Drehwiderstands ausgehend von der Ausgangsstellung A ist eine den Betätigungsabschnitt 32 umschlingende Drehfeder 56 vorgesehen, welche, wie in Fig. 3 dargestellt, innerhalb des Gehäusedeckels 54 liegt und einen ersten, radial zur Drehachse 18 auf diese zu verlaufenden Endschenkel 62 sowie einen zweiten, ebenfalls radial zur Drehachse 18 auf diese zu verlaufenden Endschenkel 64 aufweist, die auf unterschiedlichen Seiten eines Positionierelements 66 für die Drehfeder 56 liegen, wobei sich die Endschenkel 62 und 64 an gegenüberliegenden Seiten des Positionierelements 66 anlegen, und über das Positionierelement 66 radial in Richtung der Drehachse 18 überstehen.

Das Positionierelement 66 ist dabei in definierter Winkelposition relativ zum Gehäusedeckel 54 angeordnet, beispielsweise in definierter Position an den Gehäusedeckel 54 gehalten, insbesondere angeformt.

Zwischen die Endschenkel 62 und 64 greift außerdem ein am Betätigungsabschnitt 32 gehaltener Mitnehmer 68 ein, welcher in der in Fig. 3 dargestellten Ausgangsstellung A dem Positionierelement 66 zugewandt und diesem gegenüberliegend angeordnet ist, wobei der Mitnehmer 68 vorzugsweise durch die Endschenkel 62 und 64 der Drehfeder 56 in der Ausgangsstellung A gehalten ist.

Wird nun das Griffrohr 20 in einer ersten Drehrichtung 72 um die Achse 18 gedreht, welcher einer Drehrichtung entgegen dem Uhrzeigersinn entspricht, so nimmt der Mitnehmer 68 den ersten Endschenkel 62 mit, während der zweite Endschenkel 64 an dem Positionierelement 66 in Anlage bleibt und somit hat die Drehfeder 56 die Tendenz, den ersten Endschenkel 62 wiederum in Richtung des Positionierelements 66 zu bewegen, wodurch der Mitnehmer 68 eine Kraft durch den ersten Endschenkel 62 erfährt, die ein auf den Betätigungsabschnitt 32 und das Griffrohr 20 wirkendes Drehmoment erzeugt, dass der Drehbewegung in der ersten Drehrichtung 72 solange entgegen wirkt, bis der Betätigungsabschnitt 32 und das Griffrohr 20 wieder die Ausgangsstellung A erreicht haben.

Wird das Griffrohr 20 ausgehend von der Ausgangsstellung A in eine zweite Drehrichtung 74, die der ersten Drehrichtung 72 entgegengesetzt gerichtet ist, gedreht, so wirkt der Mitnehmer 68 auf den zweiten Endschenkel 64 und bewegt diesen vom Positionierelement 66 weg, während der erste Endschenkel 62 am Positionierelement 66 in Anlage bleibt, worauf die Drehfeder wiederum durch die Kraft auf den Mitnehmer 68 ein auf den Betätigungsabschnitt 32 und das Griffrohr 20 wirkendes Drehmoment erzeugt, welches der zweiten Drehrichtung 74 entgegengesetzt in Richtung der Ausgangsstellung wirkt.

Zur Begrenzung der Drehbewegung des Betätigungsabschnitts 32 und des Griffrohrs 20 ist der Betätigungsabschnitt 32 mit einem Anschlag 82 versehen, welcher mit diesem mitdreht, während das Gehäuse 40 Endanschläge 84, 86 aufweist, die durch Zusammenwirken mit dem Anschlag 82 die Drehbewegung des Betätigungsabschnitts 32 begrenzen.

Beispielsweise ist der erste Endanschlag 84 in einem ersten Winkelabstand 92 vom in Ausgangsstellung A stehenden Anschlag 82 angeordnet, während der zweite Endanschlag 86 in einen zweiten Winkelabstand 94 von dem in Ausgangsstellung A stehenden Anschlag 82 angeordnet ist, so dass eine Drehbewegung des Betätigungsabschnitts 32 und somit des Griffrohrs 20 ausgehend von der Ausgangsstellung A in der ersten Drehrichtung 72 über einen dem ersten Winkelabstand entsprechenden Winkelbereich möglich ist und ausgehend von der Ausgangsstellung A eine Drehbewegung in der zweiten Drehrichtung 74 über den zweiten Winkelabstand 94 möglich ist.

Beispielsweise liegt der erste Winkelabstand im Bereich vom 50° bis 80° und der zweite Winkelabstand im Bereich von 10° bis 30°.

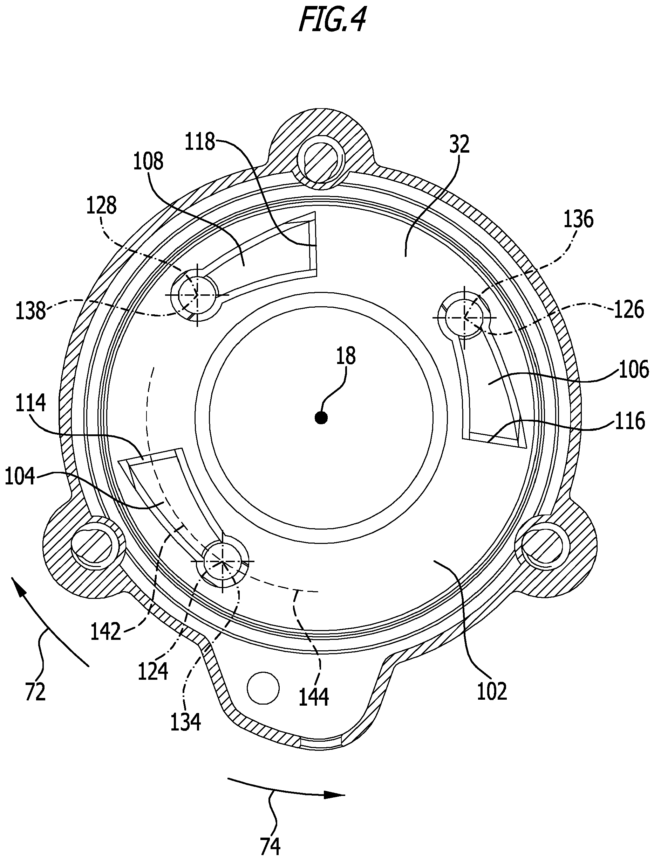

Wie in Fig. 3 und 4 dargestellt, ist der Betätigungsabschnitt auf seiner der flächenhaft ausgebildeten Funktionseinheit zugewandten Stirnseite 102 mit federelastisch ausgebildeten Druckfingern 104, 106, 108 versehen, die jeweils an ihrer Fingerbasis 114, 116, 118 mit dem Betätigungsabschnitt 32 verbunden sind und der Fingerbasis 114, 116, 118 gegenüberliegende Druckelemente 124, 126 und 128 aufweisen, die in Richtung parallel zur Drehachse 18 federelastisch bewegbar sind und beispielsweise in Richtung der flächenhaft ausgebildeten Funktionseinheit 42 kugelkappenförmig gewölbt sind, so dass diese in der Lage sind, mit Druckpunkten 134, 136, 138, deren Ausdehnung durch die Form der jeweiligen Kugelkappen definiert ist, die Funktionseinheit 42 zu beaufschlagen.

Dabei sind die Druckpunkte 134, 136, 138 ausgehend von der Ausgangsstellung A jeweils längs einer ersten Bahn 142 in der ersten Drehrichtung 72 bewegbar und längs einer zweiten Bahn 144 in der zweiten Drehrichtung 74 bewegbar.

Dabei bewegen sich bei einer Drehung des Griffrohrs 20 und somit auch des Betätigungsabschnitts 32 ausgehend von der Ausgangsstellung A in der ersten Drehrichtung 72 alle Druckpunkte 134, 136, 138 längs der ersten Bahn 142 maximal über einen dem ersten Winkelabstand 92 entsprechenden Winkelbereich und ausgehend von der Ausgangsstellung A in der zweiten Drehrichtung 74 maximal über einen dem zweiten Winkelabstand 94 entsprechenden Winkelbereich.

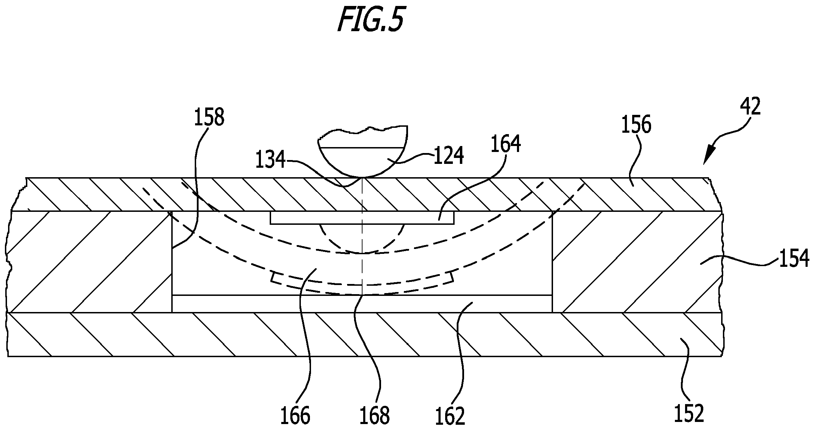

Die flächenhaft ausgebildete Funktionseinheit 42 umfasst, wie in Fig. 5 dargestellt, eine Trägerplatine 152, auf welcher eine Distanzlage 154 angeordnet ist, wobei die Distanzlage 154 auf einer der Trägerplatine 152 zugewandten Seite eine elastische Folie 156 trägt.

Dabei ist die Distanzlage 154 mit Aussparungen 158 versehen, in welchen einerseits jeweils ein unmittelbar auf der Trägerplatine 152 liegendes erstes Schichtsystem 162 angeordnet ist und in welchen an der elastischen Folie 156 auf einer dem ersten Schichtsystem 162 zugewandten Seite jeweils ein zweites Schichtsystem 164 angeordnet ist.

Sowohl die Trägerplatine 152 als auch die Distanzlage 154 und die Folie 156 erstrecken sich parallel zur Ebene 48, die senkrecht zur Drehachse 18 verläuft.

Das jeweilige zweite Schichtsystem 164 wird dabei bei unbeaufschlagter elastischer Folie 156 dann in einer Richtung senkrecht zum Schichtverlauf des ersten Schichtsystems 162 und des zweiten Schichtsystems 164 in einem räumlichen Abstand voneinander gehalten, so dass sich diese nicht berühren, wobei dies dadurch erreicht wird, dass die Folie 156 durch die außerhalb des ersten Schichtsystems 162 verlaufende Distanzlage 154 über den Aussparungen 158 gespannt gehalten wird, so dass sich die ersten Schichten 162 und die zweiten Schichten 164 aufgrund des zwischen diesen liegenden Freiraums 166 nicht berühren.

Die Trägerplatine 152, die Distanzlage 154 und die elastische Folie 156 sind fest miteinander verbunden und schließen somit die in den Aussparungen 158 angeordneten Schichtsysteme 162 und 164 hermetisch ein, so dass diese keinen Umgebungseinflüssen ausgesetzt sind.

Wird allerdings die elastische Folie 156 durch das entsprechende Druckelement, beispielsweise das Druckelement 124, Druckpunkts 134 beaufschlagt, so lässt sich die elastische Folie, wie in Fig. 5 gestrichelt dargestellt, soweit deformieren, dass im Bereich einer durch den Druckpunkt 134 verlaufenden Lotrechten auf dem ersten Schichtsystem 162 eine Berührung zwischen dem ersten Schichtsystem 162 und dem zweiten Schichtsystem 164 in einem am Ort des Druckpunkts 134 liegenden elektrischen Kontaktpunkt 168 erfolgt, so dass folglich das zweite Schichtsystem 164 das erste Schichtsystem 162 an diesem Kontaktpunkt 168 kontaktiert.

Beispielsweise ist das jeweilige zweite Schichtsystem 164 aus einem elektrisch gut leitenden Material ausgebildet, so dass die Lage des Kontaktpunktes 168 auf dem jeweiligen zweiten Schichtsystem ohne Einfluss auf den zu erfassenden Wert der Steuergröße ist.

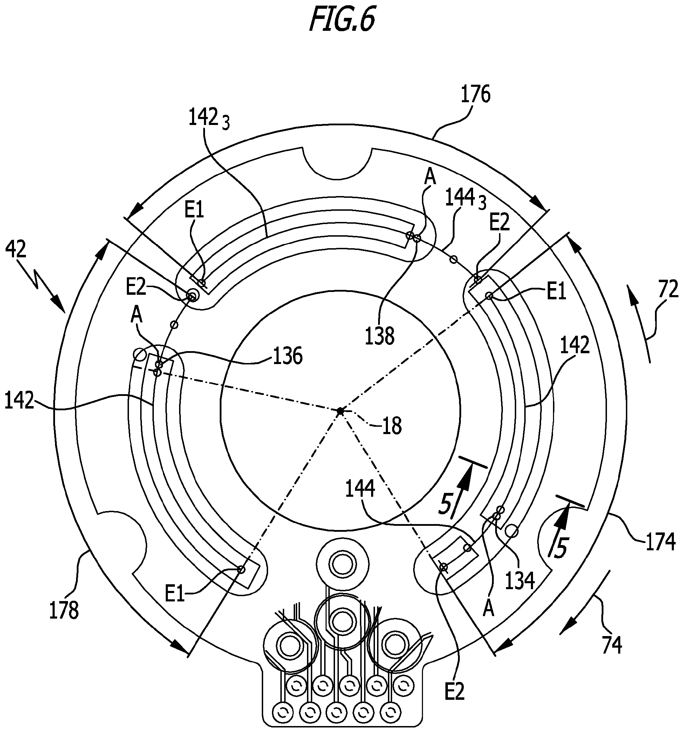

Die Bahnen, längs welchen die Druckpunkte 134, 136 und 138 der Druckelemente 124, 126, 128 zur Erzeugung von entsprechenden Kontaktpunkten 168 zwischen dem zweiten Schichtsystem 164 und dem ersten Schichtsystem 162 auf der Folie 156 verlaufen, sind in Fig. 6 dargestellt.

Ausgehend von der jeweiligen Ausgangsstellung A wandern dabei bei einer Drehung des Griffrohrs 20 mit dem Betätigungsabschnitt 32 in der ersten Drehrichtung 72 die Druckpunkte 134, 136, 138 und somit auch die durch diese entstandenen Kontaktpunkte 168 längs der jeweils für diese vorgesehenen ersten Bahn 142 bis zu einer ersten Endstellung E1, wobei dieser Drehbewegung die Drehfeder 56 in der beschriebenen Art und Weise entgegenwirkt.

Ausgehend von der Ausgangsstellung A besteht aber auch die Möglichkeit, durch Drehen des Griffrohrs 20 mit dem Betätigungsabschnitt 32 in der zweiten Drehrichtung 74 die Druckpunkte 134, 136 und 138 und somit die durch diese entstandenen Kontaktpunkte 168 in der Drehrichtung 74 längs der jeweils für diese vorgesehenen zweiten Bahn 144 bis zu der jeweiligen Endstellung E2 wandern zu lassen.

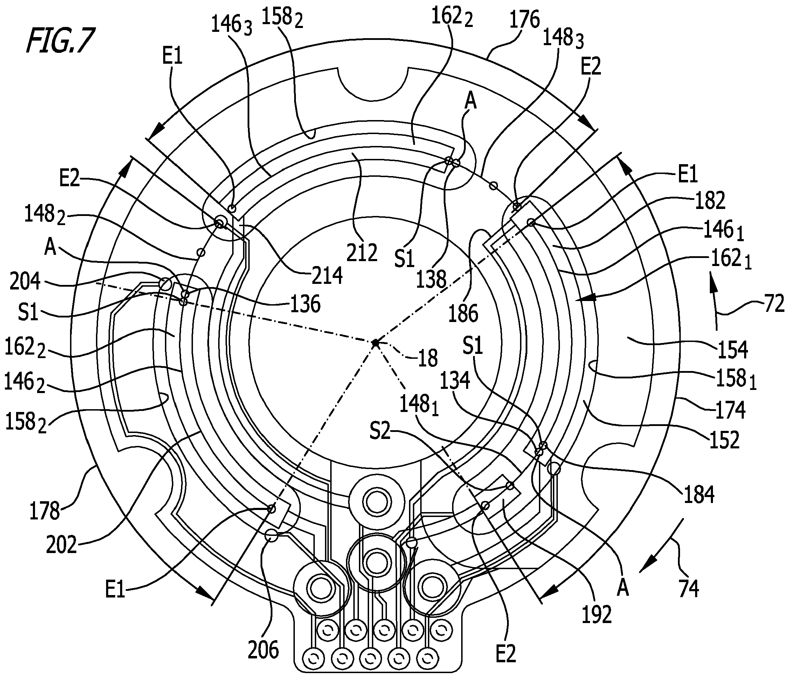

Die durch das Wandern der Druckpunkte 134, 136, 138 längs der ersten Bahnen 142₁ bis 142₃ und längs der zweiten Bahnen 144₁ bis 144₃ entstehenden Kontaktpunkte 168 wandern dabei auf ersten Abtastpfaden 146₁ bis 146₃ und zweiten Abtastpfaden 148₁ bis 148₃ zwischen den ersten Schichtsystemen 162₁ bis 162₃ und den zweiten Schichtsystemen 164₁ bis 164₃, wie in Fig. 7 dargestellt, wodurch ein Abtasten der ersten und/oder zweiten Schichtsysteme 162, 164 erfolgt, das eine elektrische Steuergröße ergibt.

Die Kreissektoren 174, 176 und 178 in denen die jeweiligen ersten und zweiten Bahnen 142 und 144 für die jeweiligen Druckpunkte 134, 136, 138 liegen, nicht überlappend angeordnet sind, so dass die ersten und zweiten Bahnen 142, 144 der Druckpunkte 134, 136, 138 in demselben radialen Abstand von der Drehachse 18 verlaufen können.

Es besteht aber auch die Möglichkeit, die ersten und zweiten Bahnen 142, 144 der jeweiligen Druckpunkte 134, 136, 138 auf jeweils verschiebenden Radien zur Drehachse 18 verlaufen zu lassen.

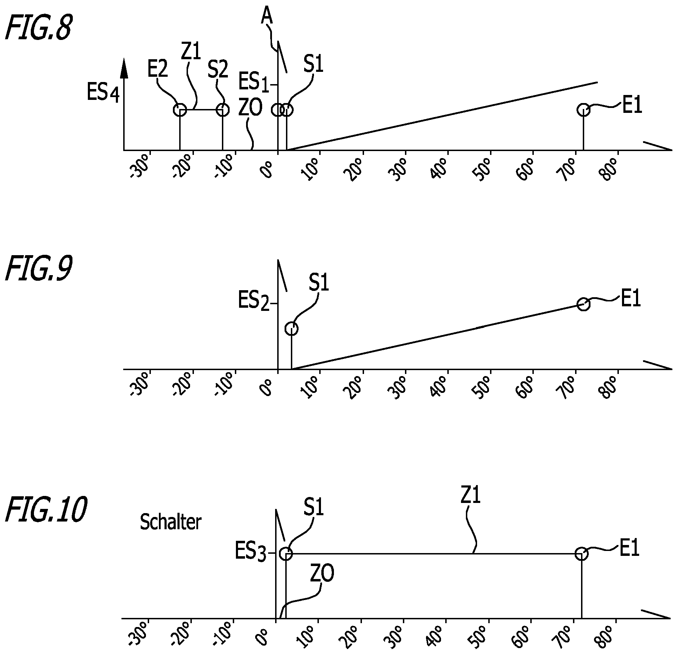

Wie in Fig. 7 dargestellt, verlaufen die erste Bahn 142 und die zweite Bahn 144 des Druckpunktes 134 über das in der Aussparung 158₁ der Distanzlage 154 und auf der Trägerplatte 152 innerhalb der Aussparung 158₁ angeordnete erste Schichtsystem 162₁, welches einen sich längs der ersten Bahn 142 erstreckenden ersten Schichtabschnitt 182 aufweist, der im Bereich einer unmittelbar neben der Ausgangsstellung A liegenden Startstellung S1 mit einem ersten Anschluss 184 kontaktiert ist und im Bereich der ersten Endstellung E1 mit einem zweiten Anschluss 186 kontaktiert ist und ähnlich wie bei einem Potentiometer aus einem einem nennenswerten elektrischen Widerstand aufweisenden Material hergestellt ist, so dass sich, wie in Fig. 8 dargestellt, bei Anlegen einer Spannung zwischen dem ersten Anschluss 184 und dem zweiten Anschluss 186 und Kontaktieren des ersten Schichtabschnitts 162₁ längs des ersten Abtastpfades 146₁ zwischen der Startstellung S1 und der Endstellung E1 durch die Kontaktpunkte 168 in verschiedenen Winkelabständen von der Startstellung S1 eine Spannung als Wert einer elektrischen Steuergröße ES abgreifen lässt.

Ist beispielsweise der erste Schichtabschnitt 182 mit konstanter Dicke ausgebildet, so steigt vorzugsweise der Wert der elektrischen Steuergröße ES linear mit zunehmendem Winkelabstand von der Startstellung S1 bis zur ersten Endstellung E1 an, wobei in diesem Fall beispielsweise der erste Anschluss 184 auf Masse und der zweite Anschluss 186 auf einer vorgegebenen Spannung liegen.

Der erste Schichtabschnitt 182 wirkt somit zwischen dem ersten Anschluss 184 und dem zweiten Anschluss 186 bei Anlegen von Masse an dem ersten Anschluss 184 und einer Spannung an dem Anschluss 186 als elektrischer Spannungsteiler, so dass eine Kontaktierung des ersten Schichtabschnitts 182 durch die mittels des Druckpunkts 134 erzeugten Kontaktpunkte 168 zwischen der ersten Startstellung S1 und der Endstellung E1 die Möglichkeit eröffnet, längs des Abtastpfades 146₁ kontinuierlich Zwischenwerte der Spannung abzugreifen, die zwischen dem ersten Anschluss 184 und dem zweiten Anschluss 186 anliegt.

Zum Abtasten der verschiedenen Spannungen des Spannungsteilers ist das zweite Schichtsystem 164 mit einem dem ersten Schichtabschnitt 182 gegenüberliegendem Schichtabschnitt aus elektrisch gut leitendem Material versehen, so dass die Lage des Kontaktpunktes 168 auf diesem elektrisch gut leitenden Schichtabschnitt den Wert der Steuergröße nicht beeinflusst.

Ferner umfasst das erste Schichtsystem 162₁ ausgehend von der Ausgangsstellung A längs der zweiten Bahn 144 einen elektrisch nicht leitenden Schichtabschnitt 188 und dann ausgehend von einer Startstellung S2 bis zur Endstellung E2 einen zweiten Schichtabschnitt 192, welcher vorzugsweise aus einem gut elektrisch leitenden Material hergestellt ist, so dass sich bei einem Abtasten des zweiten Schichtabschnitts 192 längs des Abtastpfades 148₁ durch die einzelnen Kontaktpunkte 168 zwischen der Ausgangsstellung A und der zweiten Startstellung S2 eine elektrische Steuergröße von Null und danach zwischen der zweiten Startstellung S2 und der zweiten Endstellung E2, wie in Fig. 8 dargestellt, eine elektrische Steuergröße ES ergibt, die von Null verschieden ist.

Ein Abtasten des zweiten Schichtabschnitts 192 liefert somit lediglich ein Schaltsignal Z1, dass sich vom Schaltsignal Z0 unterscheidet, das bei einem Abtasten des elektrisch nicht leitenden Schichtabschnitts 188 zwischen der Ausgangsstellung A und der zweiten Startstellung S2 entsteht, dies ist das Schaltsignal Null, während das Schaltsignal Z1 zwischen der zweiten Startstellung S2 und der zweiten Endstellung E2 durch das Potential definiert ist, auf welchem der Schichtabschnitt 192 liegt, und das Schaltsignal Eins ist.

Zum Abtasten des zweiten Schichtabschnitts 192 ist das zweite Schichtsystem 164 mit einem dem zweiten Schichtabschnitt 192 gegenüberliegendem elektrisch gut leitenden Schichtabschnitt versehen, so dass die Lage des Kontaktpunkts 168 auf diesen elektrisch gut leitenden Schichtabschnitten das Schaltsignal nicht beeinflusst.

Unter der vom Druckpunkt 136 beschriebenen ersten Bahn 142 ist zwischen einer unmittelbar neben der Ausgangsstellung A liegenden Startstellung S1 und der Endstellung E1 das erste Schichtsystem 162₂ ebenfalls mit einem ersten Schichtabschnitt 202 versehen, welcher in gleicher Weise wie der ersten Schichtabschnitt 182 aus einem einen elektrischen Widerstand aufweisenden Material ausgebildet ist und durch einen ersten Anschluss 204 im Bereich der ersten Startstellung S1 und einen zweiten Anschluss 206 im Bereich der ersten Endstellung E1 kontaktiert ist, so dass bei Anlegen einer Spannung zwischen dem ersten Anschluss 204 und dem zweiten Anschluss 206 längs des ersten Abtastpfades 146₂ durch den Kontaktpunkt 168 Zwischenwerte der an dem Spannungsteiler anliegenden Spannung als Werte einer elektrischen Steuergröße ES abtastbar sind (Fig. 2).

Der zweiten Bahn 144₂ des Druckpunkts 136 sind bei diesem Ausführungsbeispiel keine Funktionen zugeordnet, so dass ein Bewegen des Druckpunkts 136 längs der zweiten Bahn 144₂ funktionslos ist.

Wie in Fig. 10 dargestellt, ist der ersten Bahn 142₁ des Druckpunkts 138 das erste Schichtsystem 162₃ zugeordnet, welches einen ausgehend von einer unmittelbar neben der Ausgangsstellung A liegenden ersten Startstellung S1 bis zur Endstellung E1 verlaufenden ersten Schichtabschnitt 212 aufweist, der seinerseits durch eine elektrisch gut leitende Schicht gebildet ist und nur mit einem ersten Anschluss 214 kontaktiert ist, so dass der erste Schichtabschnitt 212 nicht als Spannungsteiler wirkt, sondern als Schaltkontakt und jeder Kontaktpunkte 168 längs des ersten Abtastpfades 146₃ zwischen dem zweiten Schichtsystem 164 und dem ersten Schichtabschnitt 212 ein konstantes Schaltsignal Z0 oder Z1 als elektrische Steuergröße ES liefert.

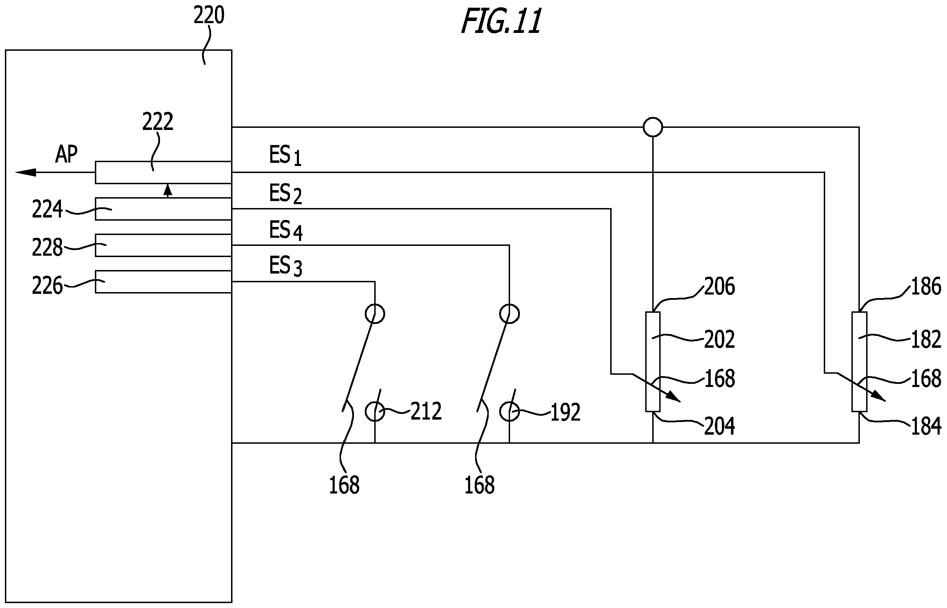

Die durch die vorstehend beschriebenen ersten Schichtsysteme 162₁, 162₂ und 162₃ und zweiten Schichtsysteme 164 realisierbaren Funktionen der Funktionseinheit bei Beaufschlagung der ersten Bahnen 142 und zweiten Bahnen 144 durch die Druckpunkte 134, 136 und 138 unter Erzeugung der entsprechenden Kontaktpunkte 168 lassen sich, wie in Fig. 11 dargestellt, in einem Steuergerät 220 wie folgt verschalten.

Beispielsweise dient das elektrische Steuersignal ES1 dazu, in einer Geschwindigkeitssteuerstufe 222 einen Ansteuerparameter AP für einen Antrieb zu erzeugen.

Die elektrische Steuergröße ES2 dient in einer redundanten Geschwindigkeitssteuerstufe 224 dazu, die Funktion der ersten Geschwindigkeitssteuerstufe 222 zu überprüfen und gegebenenfalls bei mangelnder Redundanz, beispielsweise durch eine elektrische Fehlfunktion der Funktionseinheit 42, die Erzeugung des Ansteuerparameters für den Antrieb zu unterbrechen.

Die elektrische Steuergröße ES3, welche lediglich ein Schaltsignal Z0 oder Z1 darstellt, dient ebenfalls zur redundanten Überwachung der ersten Steuergröße ES1 und der zweiten Steuergröße ES2 und wird einer Überwachungseinheit 226 zugeführt, welche eine weitere redundante Überprüfung der von der Steuereinheit 222 erfassten Steuergröße ES1 erlaubt und bei einer Fehlfunktion ein Ausgeben des Ansteuerparameters AP unterdrückt.

Die Steuergröße ES4 wird beispielsweise einer Bremssteuereinheit 228 zugeführt, welche es beispielsweise erlaubt, eine Antriebsbremsfunktion einzuleiten oder gegebenenfalls eine Erzeugung von elektrischer Energie zum Bremsen einzusetzen. Es wäre aber auch denkbar, mit der Steuergröße ES4 andere Funktionen, wie beispielsweise ein Zurücksetzen eines Tempomaten, oder noch weitere Komfortfunktionen zu steuern.

## Patentansprüche

1. Drehbetätigungselement (10) für ein lenkergeführtes Fahrzeug, insbesondere Drehbetätigungselement für die Betriebszustandssteuerung des Fahrzeugs, umfassend ein um eine Drehachse (18) drehbar an einem Lenker (12) gelagertes Griffelement (20), welches einen Griffabschnitt (22) zur Auflage einer Hand einer Bedienungsperson und einen in einem drehfest am Lenker (12) gehaltenen Drehbetätigungsgehäuse (40) angeordneten Betätigungsabschnitt (32) aufweist,
**dadurch gekennzeichnet, dass** der Betätigungsabschnitt (32) mindestens ein auf einer Bahn (142, 144) um die Drehachse (18) bewegbares und in Richtung quer zu der Bahn (142, 144) federelastisch beaufschlagtes Druckelement (124, 126, 128) aufweist, und dass in dem Gehäuse (40) eine drehfest angeordnete Funktionseinheit (42) angeordnet ist, welche mindestens einen in einem Innern der Funktionseinheit (42) und in einer Fläche (48) verlaufenden Abtastpfad (146, 148) aufweist, entlang von welchem durch eine Beaufschlagung mittels des Druckelements (124, 126, 128) und abhängig von dem Ort der Beaufschlagung durch das Druckelement (124, 126, 128) verschiedene Werte einer elektrischen Steuergröße (ES) abtastbar sind.

2. Drehbetätigungselement nach Anspruch 1, **dadurch gekennzeichnet, dass** das Griffelement (20) im unbetätigten Zustand durch ein federelastisches Element (56) in einer Ausgangsstellung (A) gehalten ist.

3. Drehbetätigungselement nach einem der voranstehenden Ansprüche, **dadurch gekennzeichnet, dass** das Griffelement (20) ausgehend von einer Ausgangsstellung (A) gegen eine erste Kraft, die in Richtung zurück zur Ausgangsstellung (A) wirkt, in einer ersten Drehrichtung (72) drehbar ist, und/oder dass insbesondere das Griffelement (20) ausgehend von der Ausgangsstellung gegen eine zweite Kraft, die in Richtung zurück zur Ausgangsstellung (A) wirkt, drehbar ist, und/oder dass insbesondere die erste Kraft und die zweite Kraft durch denselben Kraftspeicher, insbesondere dasselbe federelastische Element (56) erzeugbar sind.

4. Drehbetätigungselement nach dem Oberbegriff des Anspruchs 1 oder nach einem der voranstehenden Ansprüche, **dadurch gekennzeichnet, dass** mit dem mindestens einen Abtastpfad (146, 148) ein von dem Wert der elektrischen Steuergröße (ES) in einer Ausgangsstellung (A) des Griffelements (20) abweichender Wert der elektrischen Steuergröße (ES) in einer anderen Stellung des Griffelements (20) als der Ausgangsstellung (A) erzeugbar ist, dass insbesondere mit dem mindestens einen Abtastpfad (146, 148) ausgehend von der Ausgangsstellung (A) des Griffelements (20) ein mit zunehmenden Winkelabstand von der Ausgangsstellung (A) stetig zu - oder abnehmender Wert der elektrischen Steuergröße (ES) erzeugbar ist, und/oder dass insbesondere mit dem mindestens einen Abtastpfad (146, 148) mindestens zwei unterschiedliche Schaltsignale (Z0, Z1) erzeugbar sind.

5. Drehbetätigungselement nach einem der voranstehenden Ansprüche, **dadurch gekennzeichnet, dass** in der Funktionseinheit (42) mehrere Abtastpfade (146, 148) vorgesehen sind und dass insbesondere die mehreren Abtastpfade (146, 148) in derselben, senkrecht zur Drehachse (18) verlaufenden Ebene (48) angeordnet sind und /oder dass insbesondere die mehreren Abtastpfade (146, 148) in verschiedenen Kreissektoren (174, 176, 178) um die Drehachse (18) angeordnet sind.

6. Drehbetätigungselement nach Anspruch 5, **dadurch gekennzeichnet, dass** die mehreren Abtastpfade (146, 148) in unterschiedlichen Kreisbogensegmenten um die Drehachse (18) angeordnet sind.

7. Drehbetätigungselement nach einem der voranstehenden Ansprüche, **dadurch gekennzeichnet, dass** jedem der Abtastpfade (146, 148) ein Druckelement (124, 126, 128) zugeordnet ist.

8. Drehbetätigungselement nach einem der voranstehenden Ansprüche, **dadurch gekennzeichnet, dass** bei einer Drehung des Griffelements (20) jedes der Druckelemente (124, 126, 128) über den jeweiligen mindestens einen diesem Druckelement (124, 126, 128) zugeordneten Abtastpfad (146, 148) bewegt wird.

9. Drehbetätigungselement nach einem der voranstehenden Ansprüche, **dadurch gekennzeichnet, dass** entlang von mindestens zwei der Abtastpfade (146, 148) durch Beaufschlagung von mindestens zwei an dem Betätigungsabschnitt (32) angeordneten Druckelementen (124, 126, 128) ein Erfassen von Steuergrößen erfolgt.

10. Drehbetätigungselement nach einem der voranstehenden Ansprüche, **dadurch gekennzeichnet, dass** der jeweilige Abtastpfad (146, 148) durch ein erstes Schichtsystem (162) und ein dem ersten Schichtsystem (162) zugewandtes zweites Schichtsystem (164) gebildet ist, dass das zweite Schichtsystem (164) im beaufschlagungsfreien Zustand im Abstand von dem ersten Schichtsystem (162) angeordnet ist und im durch das Druckelement (124, 126, 128) beaufschlagten Zustand das erste Schichtsystem (162) in einem Kontaktpunkt (168) lokal kontaktiert und dass die Lage des Kontaktpunkts (168) den Wert der elektrischen Steuergröße (ES) festlegt, und dass insbesondere verschiedene Winkellagen des Kontaktpunkts (168) bezogen auf die Drehachse (18) verschiedene Werte der elektrischen Steuergröße (ES) festlegen, und/oder dass insbesondere das erste (162) und/oder das zweite Schichtsystem (164) so ausgebildet sind, dass unterschiedliche Lagen des Kontaktpunkts (168) zu unterschiedlichen Werten der elektrischen Steuergröße (ES) führen.

11. Drehbetätigungselement nach einem der voranstehenden Ansprüche, **dadurch gekennzeichnet, dass** eines der Schichtsysteme (162) so ausgebildet ist, dass auf diesem längs des Abtastpfades (146, 148) örtlich variierende Werte der elektrischen Steuergröße abtastbar sind.

12. Drehbetätigungselement nach einem der voranstehenden Ansprüche, **dadurch gekennzeichnet, dass** das zweite Schichtsystem (164) eine elektrisch gut leitende Schicht umfasst, mit welcher entsprechend der Lage des Kontaktpunkts (168) längs des Abtastpfades (146, 148) die Werte der von dem ersten Schichtsystem (162) erzeugten elektrischen Steuergröße (ES) erfasst werden.

13. Drehbetätigungselement nach einem der Ansprüche 10 bis 12, **dadurch gekennzeichnet, dass** das erste Schichtsystem (162) eine Beschichtung auf einem Träger (152) der Funktionseinheit (42) darstellt.

14. Drehbetätigungselement nach einem der Ansprüche 10 bis 13, **dadurch gekennzeichnet, dass** das zweite Schichtsystem (164) eine dem ersten Schichtsystem (162) zugewandte Beschichtung auf einer elastischen Folie (156) ist, und dass insbesondere der Träger (152) und die elastische Folie (156) durch eine außerhalb des Abtastpfades (146, 148) angeordnete Distanzlage (154) im Abstand voneinander gehalten sind.

15. Drehbetätigungselement nach einem der Ansprüche 10 bis 14, **dadurch gekennzeichnet, dass** das erste Schichtsystem (162) und das zweite Schichtsystem (164) in einem gegen die Umgebung vollständig abgeschlossenen Raum angeordnet sind und dass insbesondere der abgeschlossene Raum durch den Träger (152) und die diesem gegenüberliegend angeordnete elastische Folie (156) sowie die zwischen dem Träger (152) und der Folie (156) außerhalb des Abtastpfades (146, 148) angeordnete Distanzlage (154) gebildet ist.

## Claims

1. Rotary actuating element (10) for a vehicle with handlebar steering especially a rotary actuating element for the operational-state control system of the vehicle comprising a handle element (20) which is mounted on a handlebar (12) and is rotatable about a rotational axis (18) and comprises a handle section (22) for placement of the user's hand and an actuating section (32) arranged in a rotary actuating housing (40) that is held on the handlebar (12) in non-rotatable manner,
**characterized in that** the actuating section (32) comprises at least one pressure element (124, 126, 128) that is movable on a track (142, 144) around the rotational axis (18) and is spring-loaded in a direction transverse to the track (142, 144), and **in that** a functional unit (42) is arranged in the housing (40) in non-rotatable manner and comprises at least one scanning path (146, 148) which runs in a surface (48) in the interior of the functional unit (42) and along which said path different values of an electrical control variable (ES) are scannable due to pressure applied by means of the pressure element (124, 126, 128) and in dependence on the position at which the pressure is applied by the pressure element (124, 126, 128).

2. A rotary actuating element in accordance with Claim 1, **characterized in that**, in the unactuated state, the handle element (20) is held in an initial position (A) by a resilient spring-like element (56).

3. A rotary actuating element in accordance with any of the preceding Claims, **characterized in that** the handle element (20) is rotatable from an initial position (A) in a first direction of rotation (72) against a first force which acts in a direction back to the initial position (A), and/or **in that** in particular the handle element (20) is rotatable from the initial position against a second force which acts in a direction back to the initial position (A), and/or **in that** in particular the first force and the second force are producible by the same energy-storing device, in particular, the same resilient spring-like element (56).

4. A rotary actuating element in accordance with the preamble of Claim 1 or in accordance with any of the preceding Claims, **characterized in that** a value of the electrical control variable (ES) deviating from the value of the electrical control variable (ES) in an initial position (A) of the handle element (20) is producible in a position of the handle element (20) other than the initial position (A) using the at least one scanning path (146, 148), **in that** in particular commencing from the initial position (A) of the handle element (20), a constantly increasing or reducing value of the electrical control variable (ES) with increasing angular spacing from the initial position (A) is producible by means of the at least one scanning path (146, 148), and/or **in that** in particular at least two different switching signals (Z0, Z1) are producible by means of the at least one scanning path (146, 148).

5. A rotary actuating element in accordance with any of the preceding Claims, **characterized in that** a plurality of scanning paths (146, 148) are provided in the functional unit (42) and that in particular the plurality of scanning paths (146, 148) are arranged in the same plane (48) running perpendicularly to the rotational axis (18), and/or **in that** in particular the plurality of scanning paths (146, 148) are arranged in different sectors of a circle (174, 176, 178) around the rotational axis (18).

6. A rotary actuating element in accordance with Claim 5, **characterized in that** the plurality of scanning paths (146, 148) are arranged in different segments of a circular arc around the rotational axis (18).

7. A rotary actuating element in accordance with any of the preceding Claims, **characterized in that** a pressure element (124, 126, 128) is associated with each of the scanning paths (146, 148).

8. A rotary actuating element in accordance with any of the preceding Claims, **characterized in that** each of the pressure elements (124, 126, 128) is moved over the respective at least one scanning path (146, 148) associated with this pressure element (124, 126, 128) upon rotation of the handle element (20).

9. A rotary actuating element in accordance with any of the preceding Claims, **characterized in that** detection of control variables is effected along at least two of the scanning paths (146, 148) due to application of pressure by at least two pressure elements (124, 126, 128) arranged on the actuating section (32).

10. A rotary actuating element in accordance with any of the preceding Claims, **characterized in that** the respective scanning path (146, 148) is formed by a first layer system (162) and a second layer system (164) which faces the first layer system (162), **in that** the second layer system (164) is arranged at a spacing from the first layer system (162) in the pressure-free state and locally contacts the first layer system (162) at a contact point (168) in the state where pressure is being applied by the pressure element (124, 126, 128), and **in that** the position of the contact point (168) determines the value of the electrical control variable (ES), and that in particular different angular positions of the contact point (168) with respect to the rotational axis (18) determine different values of the electrical control variable (ES), and/or **in that** in particular the first (162) and/or the second layer system (164) are formed in such a way that different positions of the contact point (168) lead to different values of the electrical control variable (ES).

11. A rotary actuating element in accordance with any of the preceding Claims, **characterized in that** one of the layer systems (162) is formed in such a way that locally varying values of the electrical control variable are scannable thereon along the scanning path (146, 148).

12. A rotary actuating element in accordance with any of the preceding Claims, **characterized in that** the second layer system (164) comprises an electrically highly conductive layer with which, in accordance with the position of the contact point (168) along the scanning path (146, 148), the values of the electrical control variable (ES) produced by the first layer system (162) are detected.

13. A rotary actuating element in accordance with any of the Claims 10 to 12, **characterized in that** the first layer system (162) represents a coating on a carrier (152) of the functional unit (42).

14. A rotary actuating element in accordance with any of the Claims 10 to 13, **characterized in that** the second layer system (164) is a coating on a flexible foil (156) facing the first layer system (162), and **in that** in particular the carrier (152) and the flexible foil (156) are held spaced from one another by a spacing layer (154) arranged outside the scanning path (146, 148).

15. A rotary actuating element in accordance with any of the Claims 10 to 14, **characterized in that** the first layer system (162) and the second layer system (164) are arranged in a space completely sealed from the surroundings, and **in that** in particular the sealed space is formed by the carrier (152) and the flexible foil (156) located opposite thereto and also by the spacing layer (154) arranged between the carrier (152) and the foil (156) outside the scanning path (146, 148).

## Revendications

1. Elément d'actionnement rotatif (10) pour un véhicule guidé par un guidon, en particulier élément d'actionnement rotatif pour la commande d'état de fonctionnement du véhicule, comprenant un élément de préhension (20) qui est monté sur un guidon (12) de manière à pouvoir tourner autour d'un axe de rotation (18) et qui comprend une partie poignée (22) servant d'appui à la main d'un utilisateur et une partie d'actionnement (32) agencée dans un boîtier d'actionnement rotatif (40) retenu solidaire en rotation sur le guidon (12),
**caractérisé en ce que** la partie d'actionnement (32) comprend au moins un élément de pression (124, 126, 128) mobile sur une piste (142, 144) autour de l'axe de rotation (18) et sollicité de manière élastique dans une direction transversale à la piste (142, 144) et **en ce qu'**une unité fonctionnelle (42) agencée de manière solidaire en rotation est agencée dans le boîtier (40) et présente au moins un trajet d'échantillonnage (146, 148) s'étendant dans une partie intérieure de l'unité fonctionnelle (42) et dans une surface (48), le long duquel différentes valeurs d'une grandeur de commande électrique (ES) peuvent être échantillonnées à la suite d'une sollicitation au moyen de l'élément de pression (124, 126, 128) et en fonction du lieu de la sollicitation par l'élément de pression (124, 126, 128).

2. Elément d'actionnement rotatif selon la revendication 1, **caractérisé en ce que** l'élément de préhension (20), dans l'état non actionné, est retenu par un élément élastique (56) dans une position de départ (A).

3. Elément d'actionnement rotatif selon l'une quelconque des revendications précédentes, **caractérisé en ce que** l'élément de préhension (20) peut être amené en rotation d'une position de départ (A) dans un premier sens de rotation (72) à l'encontre d'une première force qui agit dans une direction de retour à la position de départ (A), et/ou **en ce qu'**en particulier l'élément de préhension (20) peut être amené en rotation à partir de la position de départ à l'encontre d'une deuxième force qui agit dans une direction de retour à la position de départ (A), et/ou **en ce qu'**en particulier la première force et la deuxième force peuvent être générées par le même accumulateur de force, en particulier le même élément élastique (56).

4. Elément d'actionnement rotatif selon le préambule de la revendication 1 ou selon l'une quelconque des revendications précédentes, **caractérisé en ce qu'**au moyen dudit au moins un trajet d'échantillonnage (146, 148), une valeur de la grandeur de commande électrique (ES) différente de la valeur de la grandeur de commande électrique (ES) dans une position de départ (A) de l'élément de préhension (20) peut être générée dans une position de l'élément de préhension (20) différente de la position de départ (A), **en ce qu'**en particulier, au moyen dudit au moins un trajet d'échantillonnage (146, 148), à partir de la position de départ (A) de l'élément de préhension (20), une valeur de la grandeur de commande électrique (ES) diminuant ou augmentant progressivement à mesure que la distance angulaire avec la position de départ (A) augmente peut être générée, et/ou **en ce qu'**en particulier, au moyen dudit au moins un trajet d'échantillonnage (146, 148), au moins deux signaux de commutation (Z0, Z1) différents peuvent être générés.

5. Elément d'actionnement rotatif selon l'une quelconque des revendications précédentes, **caractérisé en ce que** plusieurs trajets d'échantillonnage (146, 148) sont prévus dans l'unité fonctionnelle (42) et **en ce qu'**en particulier les différents trajets d'échantillonnage (146, 148) sont agencés dans le même plan (48) s'étendant perpendiculairement à l'axe de rotation (18) et/ou **en ce qu'**en particulier les différents trajets d'échantillonnage (146, 148) sont agencés dans différents secteurs de cercle (174, 176, 178) autour de l'axe de rotation (18).

6. Elément d'actionnement rotatif selon la revendication 5, **caractérisé en ce que** les différents trajets d'échantillonnage (146, 148) sont agencés dans différents segments d'arc de cercle autour de l'axe de rotation (18).

7. Elément d'actionnement rotatif selon l'une quelconque des revendications précédentes, **caractérisé en ce qu'**un élément de pression (124, 126, 128) est associé à chacun des trajets d'échantillonnage (146, 148) .

8. Elément d'actionnement rotatif selon l'une quelconque des revendications précédentes, **caractérisé en ce que**, lors d'une rotation de l'élément de préhension (20), chacun des éléments de pression (124, 126, 128) est déplacé sur toute l'étendue dudit au moins un trajet d'échantillonnage (146, 148) respectif associé à cet élément de pression (124, 126, 128).

9. Elément d'actionnement rotatif selon l'une quelconque des revendications précédentes, **caractérisé en ce qu'**une acquisition de grandeurs de commande est réalisée le long d'au moins deux des trajets d'échantillonnage (146, 148) par sollicitation d'au moins deux éléments de pression (124, 126, 128) agencés sur la partie d'actionnement (32).

10. Elément d'actionnement rotatif selon l'une quelconque des revendications précédentes, **caractérisé en ce que** le trajet d'échantillonnage (146, 148) respectif est formé par un premier système de couches (162) et par un deuxième système de couches (164) tourné vers le premier système de couches (162), **en ce que** le deuxième système de couches (164), dans l'état exempt de sollicitation, est agencé à distance du premier système de couches (162) et, dans l'état sollicité par l'élément de pression (124, 126, 128), le premier système de couches (162) est mis localement en contact dans un point de contact (168), et **en ce que** la position du point de contact (168) détermine la valeur de la grandeur de commande électrique (ES), et **en ce qu'**en particulier différentes positions angulaires du point de contact (168) par rapport à l'axe de rotation (18) déterminent différentes valeurs de la grandeur de commande électrique (ES) et/ou **en ce qu'**en particulier le premier (162) et/ou le deuxième système de couches (164) sont conçus de telle sorte que différentes positions du point de contact (168) entraînent différentes valeurs de la grandeur de commande électrique (ES).

11. Elément d'actionnement rotatif selon l'une quelconque des revendications précédentes, **caractérisé en ce qu'**un des systèmes de couches (162) est conçu de telle sorte que des valeurs localement variables de la grandeur de commande électrique peuvent être échantillonnées sur ledit système de couches le long du trajet d'échantillonnage (146, 148).

12. Elément d'actionnement rotatif selon l'une quelconque des revendications précédentes, **caractérisé en ce que** le deuxième système de couches (164) comporte une couche bonne conductrice de l'électricité au moyen de laquelle, en fonction de la position du point de contact (168) le long du trajet d'échantillonnage (146, 148), les valeurs de la grandeur de commande électrique (ES) générées par le premier système de couches (162) sont acquises.

13. Elément d'actionnement rotatif selon l'une quelconque des revendications 10 à 12, **caractérisé en ce que** le premier système de couches (162) représente un revêtement sur un support (152) de l'unité fonctionnelle (42).

14. Elément d'actionnement rotatif selon l'une quelconque des revendications 10 à 13, **caractérisé en ce que** le deuxième système de couches (164) est un revêtement, tourné vers le premier système de couches (162), sur une feuille élastique (156), et **en ce qu'**en particulier le support (152) et la feuille élastique (156) sont retenus à distance l'un de l'autre par une couche d'écartement (154) agencée à l'extérieur du trajet d'échantillonnage (146, 148).

15. Elément d'actionnement rotatif selon l'une quelconque des revendications 10 à 14, **caractérisé en ce que** le premier système de couches (162) et le deuxième système de couches (164) sont agencés dans un espace entièrement fermé vis-à-vis de l'environnement et **en ce qu'**en particulier l'espace fermé est formé par le support (152) et la feuille élastique (156) agencée à l'opposé de celui-ci ainsi que par la couche d'écartement (154) agencée entre le support (152) et la feuille (156) à l'extérieur du trajet d'échantillonnage (146, 148).
